# EUROPEAN PATENT APPLICATION

(11) **EP 1 425 961 A1**
(43) Date of publication of application: **09.06.2004**
(21) Application number: 02730300.7
(22) Date of filing: 29.04.2002
(51) Int. Cl.: A01K 23/00, A61D 9/00

(54) **IMPROVED DIAPER FOR DOMESTIC ANIMALS**

(30) Priority: 18.05.2001 ES 200101274 U
(71) Applicant: Cartes Valiente, Jose Luis, 21120 Aljaraque - Huelva (ES)
(72) Inventor: Cartes Valiente, Jose Luis, 21120 Aljaraque - Huelva (ES)
(86) International application number: PCT/ES2002/000205
(87) International publication number: WO 2002/094013

(57) **Abstract**

It is a diaper made of several superposed layers of a waterproof material for the lower ones (2) and of an absorbent material for the upper ones (3). Its shape is adequate for pets and it is held up by adhesive-tape tipped (6) straps (4), (5) and (7).

It presents a sewing pattern (8) on the upper layers that, by pulling a stringed ring (9), folds them over the excrements and makes removal easier by preventing excrements from falling off.

The purpose of this invention is to solve the problem of pets excrements removal from cities.

## Description

### Purpose of the invention

This patent application report describes a diaper improved and fitted for pets, basically dogs and cats. Said invention has been designed to achieve sanitary standards in the street and presents many and remarkable advantages over other present systems.

This diaper is in the shape and size appropriate for the pet and, therefore, it fits the animal anatomy and permits collecting excrements at defecation, preventing thus all kind of dirt and infection. When diaper is removed, it turns into a bag that can be placed right away and safely in any waste can.

### Invention field

This invention is to be applied within the Industry engaged in making objects, devices and accessories for pets.

### Background

Applicant is aware that right now there is a variety of devices, containers and accessories intended to collect excrements after pets have excreted on the street.

It is proved that none of them prevent defecation-caused dirt and risk of infection since they work after the act.

In some cases, apart from being unhealthy for the collecting user, responsible pet owners must carry these devices every time they walk their pets in order to prevent any unpleasant images or missteps for other citizens when they walk on the area where a pet has defecated.

In all these cases, even when armed with the appropriate collecting element, pet owners can not prevent the pet from going too far away and making it impossible for him/her to know the exact place where his/her pet has defecated.

The applicant is also aware that installations have been set as pets evacuation places in some specific public areas of the city, town or village, and that said installations present a sanded surface and are fenced with a gate for the animal.

However, these pets evacuation places present several objections:
- They usually imply a high cost, that is borne by the whole community and not just by pet owners.
- They can not be set in many places.
- They need cleaning and maintenance periodically.
- They do not prevent infections as excrements are left there for longer than needed.
- Children can not be prevented from entering the installations, with the subsequent risk.

Applicant is also aware that pets lavatories have been set in some specific public areas of the city, town or village, and that said lavatories are made of cast iron or brick and that it is inside them where pets ought to defecate. However they present the same kind of objections as previously listed.

Applicant is also aware that, in some cities, there are workers who ride a motorbike incorporating a suctioning equipment to collect excrements from sidewalks, pavement or walks.

This collecting system presents the following serious inconveniences:
- It usually implies a high cost, that is borne by the whole community and not just by pet owners.
- It does not prevent infections as excrements are left there for longer than needed.
- It can not prevent a child or an adult from getting in touch with said excrements by misstep, accident or unawareness.

The evident solution to the problems raised by pets defecation that nowadays soiled our streets, walks or parks is a device that made in a moldable, absorbent and waterproof material in the appropriate shape would be put directly on and worn by the pet when taken for a walk. Therefore, the pet would defecate into said device, preventing any risk of infection and unpleasant images that nowadays are shown everywhere in our cities and towns as well as the unpleasant consequence of a misstep when citizens look away from the ground.

The applicant, however, is not aware and does not know if there exists an invention with the above mentioned features.

### Description of the invention

The improved pet diaper proposed by the invention is the solution for said problems. It is easily put on the pet at home, before taking it for a walk or in any other occasion. Its cost is small and is borne by pet owners exclusively, and the community's only responsibility is to set waste cans or containers where said diapers would be placed by pet owners after soiled.

The improved pet diaper is made of one or more external layers of a waterproof material and one or more inner layers of an absorbent material (paper, cotton or cellulose) that give the final product enough thickness to avoid any unpleasant feeling when removing after soiled.

The diaper can present a rectangular or a guitar- or bottle-shape and different sizes depending on the animal to use it. On one of its ends it presents two straps that are to lay over the pet's belly and be fastened over the pet's back. On the other end, the diaper presents other two shorter straps to be fasten around the pet's tail, that is to be left free and able to move upwards freely and naturally. That way, the pet when defecating will raise its tail and the excrements will drop into diaper easily.

In those frequent cases when pets, usually dogs, have their tails cut, and the short tail straps can not be fastened around the tail, these straps can be elongated and fastened over the other end's straps. Adhessive tape on the tips of said straps will achieve fastening, so diaper is securely put and ready to be used.

The same model can present both kinds of tail straps (shorter and longer).

The diaper presents on the pet tail section a device in the form of a ring, flap or string that when pulled, will fold the inner layer over the excrements and will prevent their falling off when removing from the pet, while making diaper folding easier in a sanitary and comfortable manner for pet owners.

### Drawings description

A set of drawings is enclosed in this report to aid to a better understanding of the invention. In said set of drawings there are represented the following:

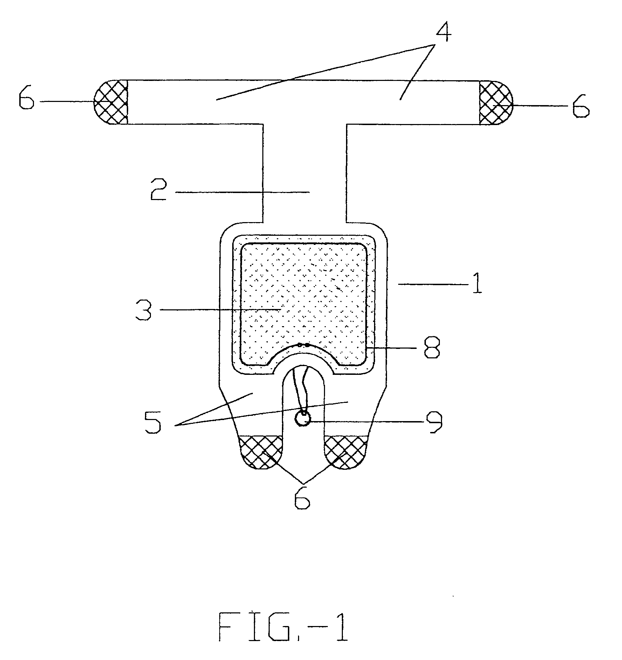

Figure 1 - A plan of the invention: an improved pet diaper with tail adhesive straps.

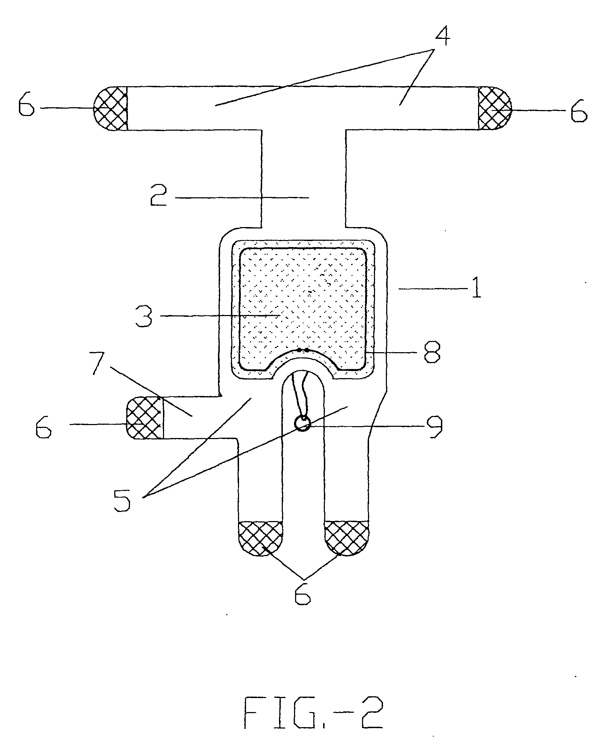

Figure 2 - A plan of the invention: Presentation of different diaper fastening systems.

### Preferential making of invention

From said figures, it is seen that the improved pet diaper is (1) made of several superposed layers, that lower layers (2) are of a waterproof -plastic- material and that upper layers (3), that will receive the pet's defecation, are of an absorbent material such as paper, cotton, cellulose or others.

From the lower layer (2) there appear, on one of its ends, two straps (4) with adhesive-tape tips (6) that hold up the diaper by taping them together over the pet's back. On the other end, the lower layer (2) makes two other straps (5) with adhesive-tape tips (6) that can be taped onto the former straps (4) while leaving the tail free.

One of those tail straps (5) presents a shorter strip (7) with an adhesive-tape tip (6) that is used to hold up said tail strap around the tail. The fastening system of the improved pet diaper is thus completed.

The diaper presents a folding device for the upper layers. It is a seam of thread or string (8) along the upper layer perimeter. Said seam ends in between the two tail straps (5) on a ring (9) that when pulled breaks the seam apart and folds the absorbent layers, retaining excrements and preventing their falling off during removal. Untaping the adhesive tips (6) that hold it up on the pet easily effects diaper removal. After diaper is removed and folded, it can be sealed by attaching said adhesive tips to the external waterproof layer.

There is no need to extend our description any longer to make the invention and its advantages clearly understood by any experts.

Materials, shape, size and elements presentation can be modified if said changes do not imply any alteration of the invention core.

The terms used in this report ought to be taken, not in a restrictive sense but in their most general and wider sense.

## Claims

1. An improved pet diaper with the appropriate shape to be directly put on the pet. It presents the feature of being made by several superposed layers of different materials; the lower layers (2) are of a waterproof material and the upper layers (3) are of an absorbent material. It presents on its two ends several straps (4) and (5) and (7) with adhesive-tape tips (6) to hold it up.

2. An improved pet diaper that, under the first claim, presents the feature of a sewing pattern (8) along the upper layers (3) perimeter finished on a ring or flap (9), that when pulled breaks said pattern apart and folds one or more of the absorbent layers, turning them into a bag over the pet's excrements.

3. An improved pet diaper that, under the two previous claims, presents the feature of an adhesive-tape tipped (6) tail straps (5) or (5) and (7) fastening system, that allows most efficacy in direct excrement collection, the invention goal.
